# DEMANDE DE BREVET EUROPEEN

(11) **EP 1 531 417 A1**
(43) Date de publication de la demande: **18.05.2005**
(21) Numéro de dépôt: 04292710.3
(22) Date de dépôt: 16.11.2004
(51) Int. Cl.: G06F 17/60

(54) **Procédé de composition et de transmission d'un message, support d'enregistrement et terminal de télécommunication correspondant.**

(30) Priorité: 17.11.2003 FR 0313435
(71) Demandeur: FRANCE TELECOM, 75015 Paris (FR)
(72) Inventeur: Potier, Aline, 92160 Antony (FR); Chevrot, Pascal, 75015 Paris (FR); Bellordre, Philippe, 75015 Paris (FR)
(74) Mandataire: Habasque, Etienne Joel Jean-François

(57) **Abrégé**

L'invention concerne un procédé de composition et de transmission d'un message et un programme d'ordinateur sur support d'enregistrement associé. Le procédé comporte les étapes suivantes :
- composition d'au moins un objet multimédia d'un type défini par l'intermédiaire d'une interface de composition (8),
- intégration de l'objet multimédia dans un message par le module client multimédia (12),
- reconnaissance du type d'objet multimédia à partir des informations relatives à son type par le module client multimédia (12) et l'unité éditeur SMIL (14),
- génération d'un code de description du ou de chaque objet multimédia intégré, dans le message par le module client multimédia (12) et une unité éditeur SMIL (14), et
- transmission du message par le module client multimédia (12) vers un serveur de messagerie multimédia.

L'invention concerne également un terminal de télécommunication de mise en oeuvre de ce procédé.

## Description

La présente invention concerne un procédé de composition et de transmission d'un message comprenant un objet multimédia et un terminal de télécommunication équipé d'un module client multimédia et d'une unité éditeur SMIL.

Le procédé comportant les étapes suivantes:
- composition d'au moins un objet multimédia d'un type défini par l'intermédiaire d'une interface de composition, ledit objet multimédia comprenant des informations relatives à son type ;
- intégration du ou de chaque objet multimédia dans un message par le module client multimédia ;
- reconnaissance du type de ou de chaque objet multimédia à partir des informations relatives à son type par le module client multimédia et l'unité éditeur SMIL ;
- génération d'un code de description du ou de chaque objet multimédia intégré, et insertion du code de description dans le message par le module client multimédia et l'unité éditeur SMIL ; et
- transmission du message par le module client multimédia vers un serveur de messagerie multimédia, par l'intermédiaire d'une interface de communication.

Dans le domaine des télécommunications, les services de messagerie multimédia sont assez répandus. Ils sont déployés sur un réseau mobile, par exemple GSM, GPRS ou UMTS ou sur un réseau fixe filaire ou non. Ils offrent la possibilité d'envoyer et de recevoir des messages de grande taille contenant des images, du son, du texte ou de la vidéo depuis tous dispositifs comportant un module client multimédia MMS. Ce module client est un moyen de communication avec un serveur de messagerie multimédia et un moyen de composition et de lecture des messages multimédias.

Classiquement, un message multimédia envoyé est composé d'une entête contenant entre autres, une information de provenance du message, de destination du message, de contenu et de date du message. Il comprend également un ou plusieurs éléments ou objets multimédias. Chaque objet multimédia est composé de données sous forme de texte et/ou de son et/ou d'image et/ou de vidéo.

Par ailleurs, le besoin apparaît de communiquer des messages multimédias plus évolués appelés par la suite messages multimédias enrichis. Ces messages enrichis contiennent des objets d'un type différent des objets des messages multimédias classiques. Ces messages enrichis ne sont pas supportés par un standard de message multimédia MMS au contraire du son, de la vidéo ou de l'image.

Un message enrichi peut comporter un ou plusieurs objets d'un type tel qu'un applicatif, un logiciel exécutable, un chemin d'accès pointant vers des fichiers stockés soit sur un serveur d'un réseau de communication, soit en local dans une mémoire du terminal de l'utilisateur destinataire. Le terme applicatif désigne tout type d'objet normalisé ou non pouvant être intégré dans un message multimédia MMS comme par exemple du texte, de l'image, de la vidéo, du son, un vecteur graphique svg ou flash ou une application Java.

Bien que les serveurs multimédias soient adaptés pour traiter ces messages enrichis, il n'est actuellement pas possible de visualiser le message composé avant transmission de celui-ci à son destinataire.

En effet, les modules clients MMS des terminaux actuels ne permettent pas de déclencher, sur demande de l'utilisateur, les actions nécessaires à une prévisualisation du message enrichi.

L'invention a pour but de proposer un procédé permettant à un terminal de visualiser le message multimédia avant sa transmission.

A cet effet, l'invention a pour objet un procédé de composition et de transmission de message du type précité, caractérisé en ce que le procédé comporte en outre une étape de prévisualisation du message composé, ladite étape comprenant les étapes suivantes :
- reconnaissance par le module client multimédia et par une unité éditeur SMIL du type de chaque objet multimédia intégré dans le message composé et identification d'au moins un opérateur de traitement apte à traiter chaque objet multimédia en fonction de son type ;
- transmission d'informations concernant chaque objet multimédia d'un module de lancement vers chaque opérateur de traitement identifié ;
- transmission d'un message d'accusé de réception comportant une indication d'acceptation ou de non-acceptation du traitement de chaque opérateur de traitement identifié vers le module client multimédia et sur acceptation :

- transmission de l'objet multimédia du module client multimédia vers l'opérateur de traitement identifié pour le lancement du traitement de celui-ci ;
- déclenchement du traitement par le module de lancement ; et
- retour au module client multimédia après traitement de l'objet multimédia réalisé par l'opérateur de traitement identifié.

Suivant des modes particuliers de réalisation, le procédé de composition comporte une ou plusieurs des caractéristiques suivantes :
- l'étape de composition d'un objet multimédia comprend une étape de création d'un objet de type hyperlien par l'utilisateur, par l'intermédiaire d'une interface homme/machine ;
- l'étape de composition d'un objet multimédia comprend au moins les étapes suivantes :
   - sélection d'au moins un objet multimédia pré-enregistré dans des moyens de stockage de données du terminal de télécommunication, par l'intermédiaire de l'interface de composition,
   - recherche de l'objet multimédia sélectionné dans les moyens de stockage de données par le module client multimédia,
- l'étape d'intégration comprend l'intégration de plusieurs objets multimédias ordonnés les uns après les autres, et en ce que l'étape de génération du code de description comprend l'établissement d'informations de synchronisation des objets multimédias ;
- il comprend une étape de transmission d'informations concernant la pré-visualisation du message, du module de lancement vers chaque opérateur de traitement identifié, lesdites informations indiquant à l'opérateur si le traitement concerne une partie ou la totalité du message.
- lorsque le type de l'objet multimédia comprend un hyperlien, l'étape de pré-visualisation du message comprend les étapes suivantes, réalisées par le module client multimédia :
   - connexion à un réseau de communication par l'intermédiaire d'une interface de communication, et
   - génération d'un message d'avertissement de l'utilisateur, préalablement à la connexion au réseau Internet.

Le procédé est apte à être enregistré sur un support d'enregistrement comprenant un programme d'ordinateur comportant des instructions pour l'exécution des étapes du procédé de composition et de transmission d'un message, lorsque le programme est exécuté sur ordinateur.

L'invention a également pour objet un terminal de télécommunication du type précité, caractérisé en ce qu'il comporte :
- une interface de composition apte à composer au moins un objet d'un type défini,
- un module client multimédia apte à intégrer le ou chaque objet dans un message,
- une unité éditeur SMIL apte à reconnaître le type de l'objet et à générer un code de description du ou de chaque objet intégré dans le message à l'aide du module client multimédia,
- le module client multimédia étant apte à intégrer le code de description dans le message et à transmettre le message vers un serveur de messagerie multimédia, par l'intermédiaire d'une interface de communication.

Suivant un mode particulier de réalisation le terminal comporte des moyens de stockage de données comprenant au moins un objet multimédia de type applicatif et/ou de type logiciel exécutable et/ou de type hyperlien et/ou de type fichier image et/ou de type fichier texte et/ou de type fichier son.

L'invention sera mieux comprise à la lecture de la description qui va suivre, donnée à titre d'exemple non limitatif et, en référence aux figures sur lesquelles :
- la figure 1 est une vue synoptique de l'architecture d'un terminal de télécommunication selon l'invention ; et
- la figure 2 est un diagramme récapitulant les différentes étapes du procédé selon l'invention.

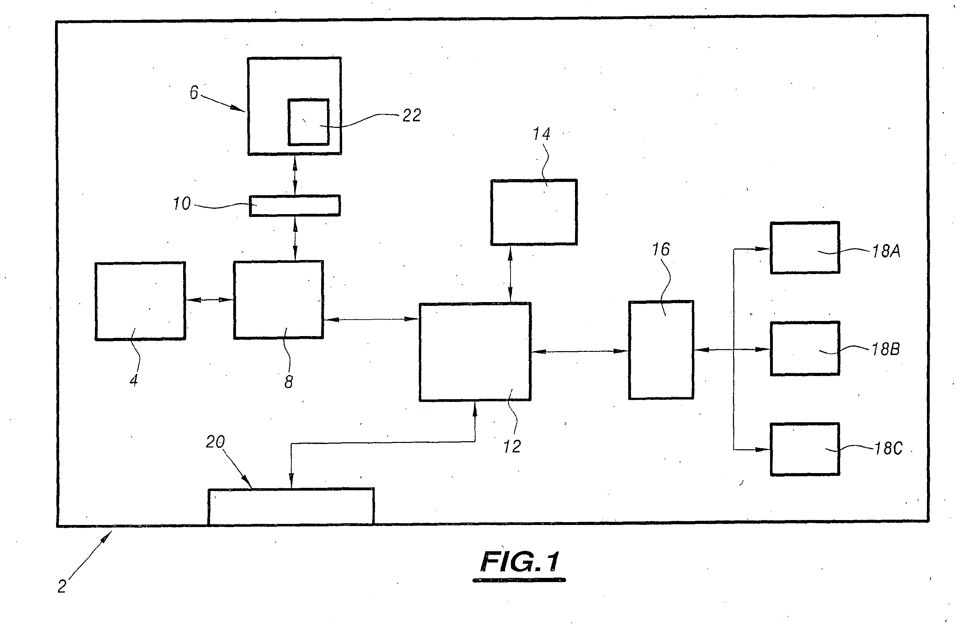

Le terminal de télécommunication selon l'invention est illustré schématiquement sur la figure 1. Ce terminal 2 comprend une interface homme/machine 4, des moyens de stockage de données 6, une interface de composition 8, un gestionnaire de fichier 10, un module client multimédia 12, une unité éditeur SMIL14, un module de lancement 16, des opérateurs de traitement 18A, 18B, 18C et une interface de communication 20.

D'une manière connue en soi, l'interface homme/machine 4 comprend un récepteur, un microphone, un clavier et un écran d'affichage d'image et/ou de texte par exemple à cristaux liquides.

Les moyens de stockage de données 6 sont constitués par une mémoire non volatile de type ROM (Read Only Memory), EEPROM (Electrically Erasable Programmable Read Only Memory) ou équivalent. Cette mémoire 6 a généralement une capacité supérieure à 500 koctets . Elle comporte une base de données 22 dans laquelle des objets multimédias sont stockés. Chaque objet multimédia stocké comprend une extension.

L'interface de composition 8 est reliée à l'interface homme/machine 4, au gestionnaire de fichiers 10 et au module client multimédia 12 pour créer, sélectionner ou rechercher des objets multimédias.

Elle comprend par exemple un menu déroulant listant différentes étapes de composition et options de traitement d'un message. Ce menu déroulant propose par exemple de commander la création ou la suppression de pages, la sélection et l'ajout d'objets multimédias, la synchronisation des objets multimédias, la pré-visualisation d'une page ou d'un message.

Le gestionnaire de fichier 10 est relié aux moyens de stockage de données 6 et à l'interface de composition 8. Il permet de visualiser et de sélectionner les objets multimédias enregistrés dans la base de données.

Le module client multimédia 12 est connue en soi, c'est un moyen de communication, de composition et de lecture d'objets multimédias.

Il est apte à échanger des données avec une unité éditeur SMIL 14 pour générer des informations relatives au type d'un objet multimédia selon le langage SMIL.

Le langage SMIL est utilisé pour coder le contenu des messages dans des balises. La balise d'un fichier est indicative du type de fichier tandis que l'extension d'un fichier détermine le format de celui-ci. Par exemple, une balise notée « <vidéo/> » définit des données de type vidéo qui peuvent être enregistrées avec les extensions suivantes : "mp4" ; ".rm" ; ".avi" ; ".asf" etc.

Les balises <audio/>, <img/>, <animation/>, <a/> définissent respectivement des fichiers de type audio, par exemple d'extension ".mp3" ou ".mid", des fichiers de type image, par exemple d'extension ".gif", ".png" ou ".jpg" ; des fichiers de type animation, par exemple d'extension ".swf" ou ".svg" et des hyperliens, par exemple d'extension "html". Les fichiers de nature diverse, non identifiés par les autres balises sont définis par une balise notée <ref/>. Cette balise <ref/> est utilisée pour décrire un objet par exemple de type logiciel exécutable.

Une description du langage SMIL est disponible à l'adresse suivante: « Synchronised Multimedia Integration Language (SMIL) Boston Specification », W3C, Working Draft SMIL 2.0 07 august 2001 URI: http://www.w3c.org/TR/smil20/.

Le module client MMS 12 et l'unité éditeur SMIL 14 sont également aptes à générer un code de description de plusieurs objets multimédias intégrés dans un message et des informations de séquence de traitement ou de synchronisation de ces objets multimédias contenus dans un message enrichi. Le langage SMIL permet de synchroniser des fichiers de nature différente pour constituer des messages multimédias.

Le module client MMS 12 et l'unité éditeur SMIL 14 sont également aptes à analyser la balise ainsi que l'extension de fichier d'un objet pour reconnaître son type et identifier l'opérateur de traitement 18A, 18B, 18C ou joueur/éditeur implanté dans le terminal adapté à la mise en oeuvre de l'exécution, l'affichage, la lecture de l'objet en question pour pré-visualiser un message.

Le module client multimédia 12 est apte à compiler dans un message un ou plusieurs objets multimédias différents, le code de description des objets multimédias et les informations de synchronisation des objets multimédias. Il est apte à envoyer ce message par un mécanisme standardisé d'encapsulation wap transparent par rapport à la nature des données transportées.

Le module client multimédia 12 est également apte à envoyer un message enrichi sur commande de l'utilisateur à partir de l'interface de composition 8 et par l'interface de communication 20.

Lorsqu'un objet multimédia est un hyperlien pointant vers un serveur d'un réseau de communication tel qu'un réseau de télécommunication ou une adresse du réseau Internet, le module client multimédia 12 est apte à rechercher le fichier multimédia stocké à cette adresse et à envoyer des informations concernant le type de ce fichier au module de lancement.

Les opérateurs de traitement 18A, 18B des messages multimédias sont également appelés applications ou afficheurs/joueurs. Ces opérateurs sont aptes à afficher, jouer, éditer des objets multimédias et à exécuter des logiciels exécutables ou des applicatifs. Ils peuvent comprendre notamment un lecteur audio, un lecteur vidéo, un afficheur d'image, un logiciel de gestion d'application Java AMS (Application Management Software) etc.

Ils sont chacun compatible avec certains formats de fichiers multimédias. Les formats des fichiers multimédias peuvent être soit de type propriétaires (flash), soit standards et normalisés par les groupes de normalisation 3GPP, IETF, W3C et OMA, au sein des groupes définissant les différents codecs utilisés pour les services mobiles.

Le module de lancement 16 des opérateurs de traitement 18A, 18B est apte à envoyer à l'opérateur de traitement identifié 18A des informations concernant le type d'objet multimédia composé afin que celui-ci confirme sa capacité à traiter cet objet.

Pratiquement, ce module de lancement 16 utilise une interface connue usuellement appelée API « Application Programming Interface » qui permet de transmettre des requêtes à un système d'exploitation, à un opérateur de traitement ou à une autre application.

De plus, le module de lancement 16 est également apte à déclencher automatiquement le lancement d'une procédure de traitement appropriée par l'opérateur de traitement identifié 18A sans aucune intervention de l'utilisateur destinataire sur son terminal.

Pour gérer le lancement d'un opérateur de traitement approprié 18A, le module de lancement 16 est apte à communiquer à l'opérateur identifié 18A des informations concernant notamment le type et la nature de l'objet multimédia à traiter. Ces informations peuvent être regroupées selon trois critères ou paramètres. Le premier paramètre, appelé EMPLACEMENT comprend le nom de l'objet ainsi que le cas échéant le chemin pour y accéder. Le second paramètre appelé ATTRIBUT DU CONTENU est un paramètre booléen indicatif d'informations concernant la pré-visualisation du message. Lorsque ce paramètre booléen est égal à 0, l'opérateur de traitement identifié 18A réalise un traitement partiel de l'objet multimédia. Lorsque ce paramètre est égal à 1, l'opérateur de traitement réalise un traitement complet de celui-ci. Le troisième paramètre appelé DEFINITION DE LA FENETRE indique la taille et la position de la fenêtre de visualisation de l'objet sur l'écran du terminal.

L'interface de communication 20 utilise un service de notification par e-mail, une librairie XML ou une interface de type MM7.

L'interface de composition 8, le gestionnaire de fichiers 10, le module client multimédia 12, l'unité éditeur 14, le module de lancement 16 et les opérateurs de traitement 18A, 18B peuvent être implémentés en matériel sur un microcontrôleur ou en code logiciel sur un support logiciel ou un composant programmé exécuté par un microprocesseur à partir d'une mémoire non volatile.

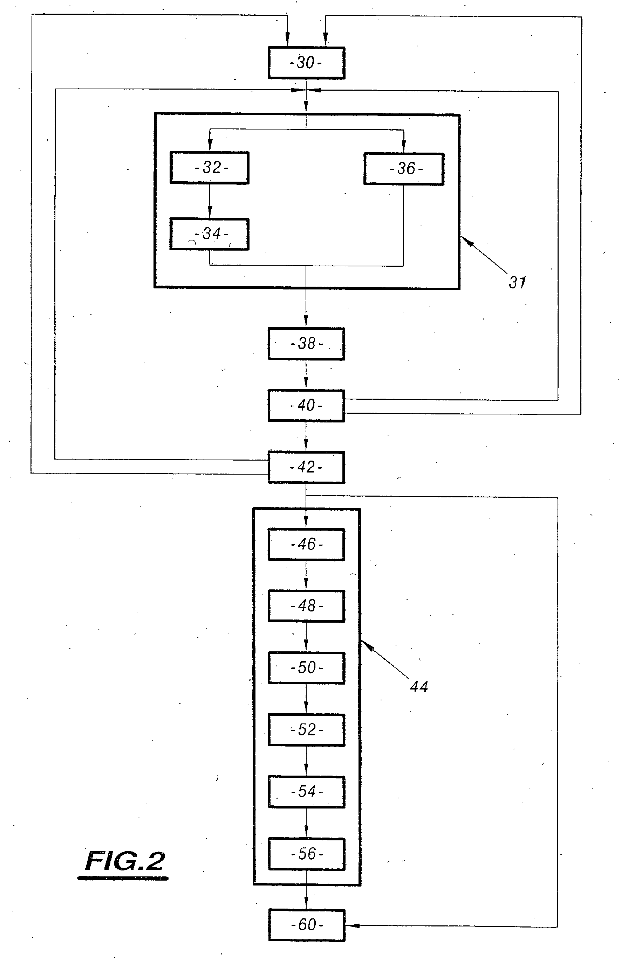

La figure 2 est un diagramme représentatif des différentes étapes du procédé de composition et de transmission d'un message selon l'invention.

Le procédé de composition d'un message comprend une étape 30 d'ouverture ou d'ajout d'une page composant le message enrichi à partir du menu déroulant de l'interface de composition 8. Une ou plusieurs pages composent un message enrichi. Les objets multimédias sont insérés dans ces pages.

Puis, le procédé comprend une étape de composition 31 d'un objet multimédia. Cette étape peut être réalisée de deux manières différentes.

Si l'objet multimédia est enregistré dans la base de données 22 de la mémoire 6 du terminal de télécommunication 2, l'utilisateur sélectionne cet objet à partir du menu déroulant de l'interface de composition 8 au cours d'une étape 32.

Puis, au cours d'une étape 34, le module client multimédia 12 recherche l'objet multimédia dans la base de données 6.

Si l'objet multimédia est un hyperlien non enregistré dans une base de données 6, l'utilisateur sélectionne dans le menu déroulant une commande de création d'un nouvel hyperlien et le compose sur le clavier de son terminal de télécommunication au cours d'une étape 36.

Ensuite, au cours d'une étape 38, l'objet multimédia recherché ou composé est inséré dans la page du message enrichi par le module client multimédia 12.

Puis, au cours d'une étape 40, le module client multimédia 12 et l'unité éditeur SMIL 14 reconnaissent le type de l'objet multimédia inséré à l'aide de son extension et génèrent un code de description de cet objet. Par exemple, si un objet multimédia est de type vidéo avec une extension "mp4". Le module client multimédia 12 et l'unité éditeur SMIL 14 reconnaissent cette extension et génèrent une balise de type <vidéo src = "vidéo1 .mp4>.

Lorsque l'objet multimédia est un hyperlien non enregistré dans la base de données du terminal, le module client multimédia 12 et l'unité éditeur SMIL 14 reconnaissent son extension « html » est génèrent un code de description du type hyperlien comprenant par exemple une balise de type <a/>. Le code de description est généré dans le message enrichi.

Si l'utilisateur souhaite intégrer d'autres objets multimédias dans la même page du message enrichi, il reprend les étapes 31 à 40 du procédé décrit précédemment. Si l'utilisateur souhaite créer une nouvelle page, il reprend les étapes 30 à 40 du procédé décrit précédemment.

Lorsque plusieurs objets sont insérés dans une page ou si un message comprend plusieurs pages, le procédé de composition d'un message selon l'invention comprend une étape 42 de synchronisation de l'ordre de traitement des objets les uns par rapport aux autres.

Pour cette étape de synchronisation, l'interface de composition 8 suit un protocole qui définit l'ordre de traitement des objets en fonction de leur type ainsi qu'un intervalle de temps prédéfini entre le traitement de deux objets. Ce protocole définit, par exemple, que les objets de type image sont traités avant les objets de type son et que ces deux traitements sont séparés par exemple par 2 secondes.

Le module client 12 et l'unité éditeur SMIL 14 transcrivent en langage SMIL les informations de synchronisation et les intègrent dans le code de description du message enrichi. Ainsi, l'utilisateur peut composer des messages enrichis comportant plusieurs objets multimédias dont les séquences d'affichage, de lecture ou d'exécution sont enregistrées. Les informations de synchronisation intégrées dans le message enrichi sont transmises à l'expéditeur simultanément au message.

Le code de description d'un message a, par exemple, la forme suivante :
</seq>
<video src = « video avi/>
</par>
<animation src = « myflash-swf/>
<audio src = « myaudio.mp3/>
</par>
</seq>

Dans cet exemple, le message composé comprend des objets multimédias de type vidéo, de type animation Flash et de type audio. La balise </seq> indique que la séquence vidéo doit être exécutée avant les séquences d'animation et d'audio. La balise </par> indique que les séquences animation et audio sont traitées en parallèle.

Alternativement, l'utilisateur du terminal définit par l'intermédiaire de l'interface de composition 8 des informations concernant l'ordre de traitement de chaque objet.

Une fois le message composé, l'utilisateur choisit soit de l'envoyer à son destinataire, soit de le prévisualiser.

Si l'utilisateur veut envoyer le message qu'il vient de composer, il choisit l'option d'envoi dans le menu déroulant de l'interface de composition 8. Le procédé de composition passe à une étape 60 au cours de laquelle le module client multimédia envoie le message enrichi par l'interface de communication 20.

Si l'utilisateur souhaite visualiser une partie ou l'ensemble du message avant sa transmission, il choisit une commande de pré-visualisation dans le menu déroulant de l'interface de composition 8.

Selon une étape 46 de cette étape de pré-visualisation, le client multimédia MMS 12 et l'unité éditeur SMIL 14 lisent le code de description du message enrichi. Ce code contient le type des objets multimédias contenus dans le message ainsi que les informations de synchronisation ainsi que des informations concernant le type de pré-visualisation.

Lors d'une étape 48, le client multimédia MMS 12 et l'unité éditeur SMIL 14 identifient les opérateurs de traitement 18A, 18B aptes à traiter les objets multimédias du message ainsi que la séquence à laquelle chaque objet multimédia doit être traité.

Au cours de l'étape 50, le module de lancement 16 gère la transmission d'informations concernant les objets multimédias, du module client multimédia 12 vers chaque opérateur de traitement identifié 18A, 18B au cours de l'étape 48.

En fonction du type de visualisation sélectionné par l'utilisateur, visualisation partielle ou complète, le module de lancement 16 commande la transmission des informations concernant les objets multimédias, les informations du type de pré-visualisation et les informations de synchronisation aux opérateurs de traitement identifiés.

A titre d'exemple, si le message comporte une adresse d'un fichier Java stocké localement sur la mémoire 6 du terminal de télécommunication 2. Dans ce cas, les informations envoyées du module client multimédia aux opérateurs de traitement comprennent notamment un paramètre EMPLACEMENT et un paramètre ATTRIBUT DU CONTENU . Le paramètre EMPLACEMENT est par exemple « javaappli.jad ». Le paramètre ATTRIBUT DU CONTENU comprend un paramètre booléen égal à 0 ou 1 en fonction du type de pré-visualisation demandé par l'utilisateur par l'intermédiaire de l'interface de composition 8. L'opérateur de traitement identifié est un logiciel de type AMS. Ce logiciel est apte à gérer le téléchargement, le stockage, l'exécution et l'effacement d'applicatif Java.

Dans le cas d'une pré-visualisation partielle, le module de lancement transmet ces informations uniquement aux opérateurs concernés par la partie de visualisation que l'utilisateur souhaite traiter.

Pendant une étape 52, les opérateurs de traitement 18A, 18B analysent les informations concernant les objets multimédias, et transmettent au module de lancement 16 un message d'acceptation de traitement ou de non-acceptation de traitement. Ce message noté NOTIFICATION D'EVENEMENT correspond par exemple à un caractère booléen.

Si le module de lancement 16 reçoit un message de refus de traitement de l'objet multimédia, le module client multimédia 12 reprend la main pour, soit identifier un autre opérateur de traitement adapté à traiter l'objet multimédia ou soit informer l'utilisateur de l'absence d'opérateur approprié à la lecture ou l'exécution de l'objet multimédia.

Si le module de lancement reçoit un message d'acceptation des opérateurs de traitement, il demande au module client multimédia d'envoyer chaque objet multimédia à chaque opérateur de traitement identifié et approprié.

Au cours d'une étape 54, le module client multimédia 12 transmet les objets multimédias contenus dans le message pour traitement de ceux-ci.

Pendant l'étape 56, le module de lancement 16, après prise en considération des informations de synchronisation contenues dans le message enrichi déclenche le lancement du traitement de chaque objet multimédia par chaque opérateur de traitement approprié 18A selon l'ordre déterminé par l'utilisateur lors de la composition du message. Le déclenchement du traitement des objets multimédias est réalisé sans aucune intervention de l'utilisateur du terminal.

Lorsque l'objet multimédia est un hyperlien pointant vers un serveur d'un réseau de communication ou un réseau Internet, l'utilisateur peut télécharger l'objet multimédia sur la mémoire 6 de son terminal 2.

Alternativement, le module client multimédia 12 se connecte au réseau de communication par l'intermédiaire de l'interface de communication 20 et lit en transit ("streaming" audio ou vidéo) l'objet multimédia.

Avantageusement, le module client multimédia 12 émet un message d'avertissement à l'utilisateur avant toute connexion au réseau de communication. En effet, la connexion au réseau Internet implique des coûts additionnels pour l'utilisateur.

Après traitement des objets multimédias du message par les opérateurs de traitement 18A, 18B, le module client 12 reprend la main.

Sur requête de l'utilisateur, réalisée à partir du menu déroulant de l'interface de composition 8, le module client multimédia 12 envoie au destinataire au cours d'une étape 60, le message enrichi composé de un ou plusieurs objets multimédias par l'intermédiaire de l'interface de communication 20.

## Revendications

1. Procédé de composition et de transmission d'un message comprenant au moins un objet multimédia à partir d'un terminal de télécommunication (2) équipé d'un module client multimédia (12) et d'une unité éditeur SMIL (14), le procédé comportant les étapes suivantes :
- composition (31) d'au moins un objet multimédia d'un type défini par l'intermédiaire d'une interface de composition (8), ledit objet multimédia comprenant des informations relatives à son type,
- intégration (38) du ou de chaque objet multimédia dans un message par le module client multimédia (12),
- reconnaissance (40) du type de ou de chaque objet multimédia à partir des informations relatives à son type par le module client multimédia (12) et l'unité éditeur SMIL (14),
- génération (40) d'un code de description du ou de chaque objet multimédia intégré, et insertion du code de description dans le message par le module client multimédia (12) et l'unité éditeur SMIL (14), et
- transmission (60) du message par le module client multimédia (12) vers un serveur de messagerie multimédia, par l'intermédiaire d'une interface de communication (20),
**caractérisé en ce que** le procédé comporte en outre une étape de prévisualisation du message composé, ladite étape comprenant les étapes suivantes :
- reconnaissance (46) par le module client multimédia (12) et par une unité éditeur SMIL (14) du type de chaque objet multimédia intégré dans le message composé et identification d'au moins un opérateur de traitement (18A, 18B,18C) apte à traiter chaque objet multimédia en fonction de son type,
- transmission (50) d'informations concernant chaque objet multimédia d'un module de lancement (16) vers chaque opérateur de traitement identifié (18A),
- transmission (52) d'un message d'accusé de réception comportant une indication d'acceptation ou de non-acceptation du traitement de chaque opérateur de traitement identifié vers le module client multimédia (12) et sur acceptation,
- transmission (54) de l'objet multimédia du module client multimédia (12) vers l'opérateur de traitement identifié (18A) pour le lancement du traitement de celui-ci,
- déclenchement (56) du traitement par le module de lancement, et
- retour (58) au module client multimédia après traitement de l'objet multimédia réalisé par l'opérateur de traitement identifié.

2. Procédé de composition et de transmission d'un message selon la revendication 1, **caractérisé en ce que** l'étape de composition (31) d'un objet multimédia comprend une étape de création (36) d'un objet de type hyperlien par l'utilisateur, par l'intermédiaire d'une interface homme/machine.

3. Procédé de composition et de transmission d'un message selon l'une quelconque des revendications précédentes, **caractérisé en ce que** l'étape de composition (31) d'un objet multimédia comprend au moins les étapes suivantes :
- sélection (34) d'au moins un objet multimédia pré-enregistré dans des moyens de stockage de données (6) du terminal de télécommunication (2), par l'intermédiaire de l'interface de composition,
- recherche (36) de l'objet multimédia sélectionné dans les moyens de stockage de données (6) par le module client multimédia(12).

4. Procédé de composition et de transmission d'un message selon l'une quelconque des revendications précédentes, **caractérisé en ce que** l'étape d'intégration (38) comprend l'intégration de plusieurs objets multimédias ordonnés les uns après les autres, et **en ce que** l'étape de génération (40) du code de description comprend l'établissement d'informations de synchronisation des objets multimédias.

5. Procédé de composition et de transmission d'un message selon l'une quelconque des revendications précédentes, **caractérisé en ce qu'**il comprend une étape de transmission d'informations concernant la pré-visualisation (44) du message, du module de lancement (16) vers chaque opérateur de traitement identifié (18A), lesdites informations indiquant à l'opérateur si le traitement concerne une partie ou la totalité du message.

6. Procédé de composition et de transmission d'un message selon l'une quelconque des revendications précédentes, **caractérisé en ce que**, lorsque le type de l'objet multimédia comprend un hyperlien, l'étape de pré-visualisation (44) du message comprend les étapes suivantes, réalisées par le module client multimédia (12):
- connexion à un réseau de communication par l'intermédiaire d'une interface de communication (20), et
- génération d'un message d'avertissement de l'utilisateur, préalablement à la connexion au réseau Internet.

7. Terminal de télécommunication, comprenant un module client multimédia, **caractérisé en ce qu'**il comprend :
- une interface de composition (8) apte à composer au moins un objet d'un type défini,
- un module client multimédia (12) apte à intégrer le ou chaque objet dans un message,
- une unité éditeur SMIL (14) apte à reconnaître le type de l'objet et à générer un code de description du ou de chaque objet intégré dans le message à l'aide du module client multimédia,
- le module client multimédia (12) étant apte à intégrer le code de description dans le message et à transmettre le message vers un serveur de messagerie multimédia, par l'intermédiaire d'une interface de communication (20).

8. Terminal de télécommunication selon la revendication 7, **caractérisé en ce qu'**il comporte des moyens de stockage de données (22) comprenant au moins un objet multimédia de type applicatif et/ou de type logiciel exécutable et/ou de type hyperlien et/ou de type fichier image et/ou de type fichier texte et/ou de type fichier son.

9. Support d'enregistrement comprenant un programme d'ordinateur comportant des instructions pour l'exécution des étapes du procédé de composition et de transmission d'un message selon l'une quelconque des revendications 1 à 6, lorsque le programme est exécuté sur ordinateur.
